Europäisches Patentamt

European Patent Office

Office européen des brevets

(11) Publication number: **0 313 552 B1**

(12) **EUROPEAN PATENT SPECIFICATION**

(45) Date of publication of patent specification: **15.04.92**   (51) Int. Cl.$^5$: **F16K 5/06, F16K 47/02**

(21) Application number: **87901700.2**

(22) Date of filing: **05.02.87**

(86) International application number:
**PCT/SE87/00054**

(87) International publication number:
**WO 88/05880 (11.08.88 88/18)**

(54) **VALVE MEANS.**

(43) Date of publication of application:
**03.05.89 Bulletin 89/18**

(45) Publication of the grant of the patent:
**15.04.92 Bulletin 92/16**

(84) Designated Contracting States:
**AT BE CH DE FR GB IT LI LU NL SE**

(56) References cited:
**EP-A- 0 043 188**    **EP-A- 0 123 408**
**EP-A- 0 166 375**    **DE-A- 3 526 258**
**DE-C- 858 178**      **FI-B- 65 479**
**SE-A- 8 503 705**

(73) Proprietor: **AB TORE J. HEDBACK**
**Edsviksvägen 10**
**S-182 33 Danderyd(SE)**

(72) Inventor: **ENGELBERTSSON, Karl-Magnus**
**Herrgardsvagen 17**
**S-182 35 Danderyd(SE)**

(74) Representative: **Lundin, Björn-Eric et al**
**Trelleborg AB Patents and Trade Marks Box**
**21024**
**S-100 31 Stockholm(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to a valve assembly comprising a housing provided with an inlet and an outlet for fluid and a spherical body rotatably arranged in the valve housing between the in- and outlet and mounted sealingly against said valve housing, said valve body being provided with fluid flow passages, any cross-section of which being small relative to any cross-section of the inlet/outlet and designed to provide a substantial flow resistance and pressure drop, said flow passages being arranged so that all fluid flow passages are open to the inlet as well as the outlet when the valve is quite open.

For adjusting a fluid flow conventional ball valves comprising two throttles in series with a fixed volume enclosed between said throttles have been found to be suitable. However, in high pressure conditions high flow rates are created at these throttles depending on small cross-sections of an inconsiderable extention in the direction of flow which may cause cavitation and a high sound level. The most critical movement in adjustment is when the first free cross-section, especially against the outlet side, opens. In this position the flow way made free should offer a great flow resistance also at small flowing amounts.

Valves of the type as disclosed in the description introduction are known in the art as having an attenuation effect. For example, EP-A-0 043 188 discloses a ball valve having a bore, wherein the flow passages are slots provided by spaced apart parallell attenuator plates permanently fixed in the bore of the ball and arranged so that the fluid flow path through the valve becomes longer and the number of flow direction reversals increases during the closing of the valve and vice versa in order to achieve an attenuation effect of the fluid flow passing through a valve. A first and a second group of passages are arranged so that all passages belonging to the first group have passages belonging to the second group on each side. Thus, the passages are arranged mixed throughout the valve body. Two adjacent passages communicate during the closing and opening phase via two cap formed spaces between the valve housing and closure member on each side of the letter. EP-A-0 166 375 discloses a fluid ball valve assembly for the purpose of noise reduction by dividing the fluid flow into individual partial streams, comprising attenuator means in the form of static mixer elements disposed in the base of the spherical valve member.

It is the object of the invention to provide a simple and, at the same time, efficient device for adjusting a fluid flow where disadvantages of cavitation and a high sound level are avoided.

For this purpose a device having the characteristic features defined in the claims is suggested according to the invention.

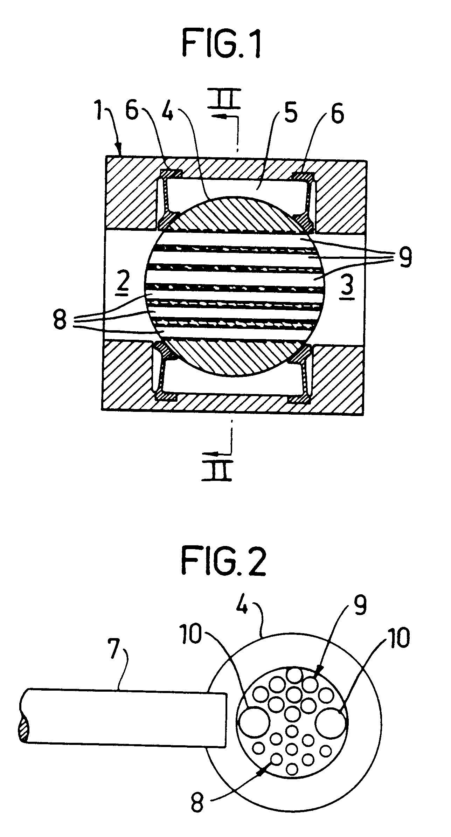

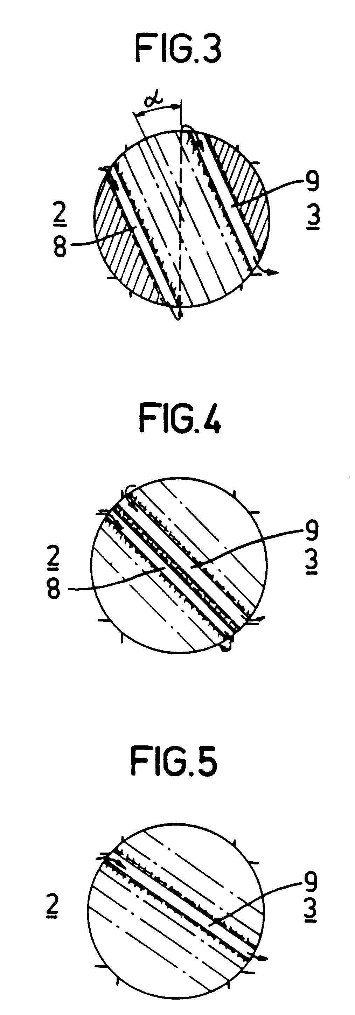

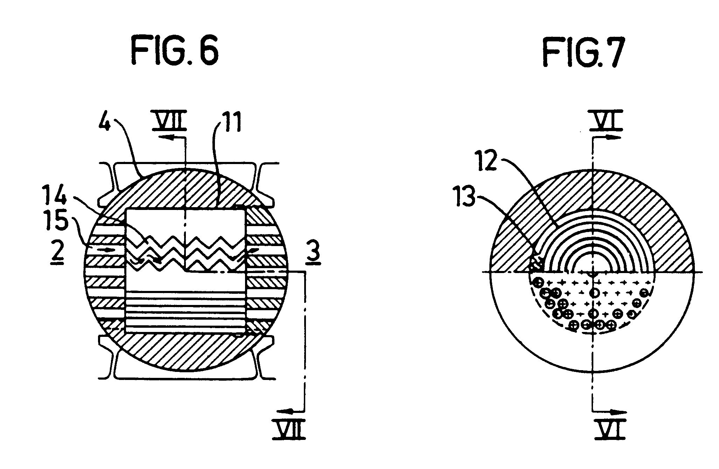

The invention is described in greater detail in the form of non-limiting examples with reference to the enclosed drawings, wherein Fig 1 shows a longitudinal section of a valve according to a first embodiment of the invention, Fig 2 shows the valve body according to the section II-II in Fig 1, Fig 3 shows a longitudinal section of the valve body with an opening angle $\alpha$ = 25°, Fig 4 shows a section corresponding to Fig 3 but with the opening angle $\alpha$ = 45°, Fig. 5 shows also a section corresponding to Fig. 3 with the opening angle $\alpha$ = 56, Fig. 6 shows a section according to VI-VI in Fig. 7 of a second embodiment of the valve, and Fig. 7 shows the valve according to the section VII-VII in Fig. 6.

With reference to Fig. 1 the ball valve comprises a valve housing 1 provided with an inlet 2 and outlet 3 and a spherical valve body 4 rotatably arranged in the valve housing 1. The valve body 4 is sealingly mounted against an annular space 5 formed in the valve housing 1 by means of two valve seat rings 6. The valve seat rings 6 are fixedly connected to the valve housing 1 by their outer peripheries and have a clearance to the valve housing 1 at their inner peripheries in order to allow a resilient motion of the valve body 4.

The valve body 4 (Figs. 1, 2) is rotatable by means of a push rod (7) fixedly connected to the valve body 4 and is provided with two groups of passing flow passages 8, 9. The flow passages 8, 9 with circular cross-sections are preferably grooved in transversal direction, for example by threads. The groups of passages 8, 9 are arranged on both sides of the diametrical plane, the passages 8 having a smaller diameter than the passages 9. The valve body 4 further comprises two smooth flow passages 10 of a larger diameter arranged in said plane. When the valve is closed all the passages end in the space 5. On the other hand, at an open valve the passages end in the in- and outlet 2, 3, as is apparent from Fig. 1.

The mode of operation of the valve will be described in the following by the aid of Figs. 3-5, where Fig. 3 shows the valve body with the opening angle $\alpha$ = 25°. In this case only a few number of passages 8 and 9, respectively, are opened. The substantial fluid flow way is marked by arrows. Thus, the fluid streams through a first throttle position in the form of passages 8 into the annular space 5 and around half the periphery in order to thereafter stream out through a second throttle in the form of passages 9. The passages 8 have a small diameter which causes a great flow resistance and consequently a great fall of pressure. The grooves of the passages cause a still more increased flow resistance and greater fall of pressure simultaneously with a lower flow rate. The above also applies to the passages 9, which, however, have a somewhat larger diameter in order to reduce the flow rate and the fall of pressure, the risk of cavitation being reduced.

Fig. 4 shows the valve body 4 with the opening angle $\alpha$ = 45°, all the passages 8 being opened and ending in the inlet 2 and the space 5 and all the passages 9 also being opened but ending in the space 5 and the outlet 3. This means that a full flow with a maximum fall of pressure can pass the valve.

When the valve is opened more than 45° (Fig. 5) a part of the fluid can stream directly from the inlet to the outlet, this share of fluid increasing by increasing valve opening. At the same time the passages 10 are opened for a direct fluid flow from the inlet 2 to the outlet 3 which reduces the fall of pressure across the valve.

Thus, when the valve is opened from 0° to 45° the flow will increase to its maximum maintaining a high fall of pressure. With continued opening of the valve the fall of pressure is successively reduced to get down to a minimum at an opening of 90° when a direct flow is reached in all the passages.

In Figs. 6-7 another embodiment of the invention is shown where the valve body 4 is turned out and provided with a cylindrical insert 11. The insert 11 comprises a number of concentric, spaced apart, tubular members 12 with corrugated insert members 13 placed in the interspaces. In this way zigzagged flow passages 14 are formed which are in fluid connection with flow passages 15 of a circular cross-section arranged in the valve body 4. The fluid connection is preferably formed so that each flow passage 15 can end in two separate passages 14.

The mode of operation of the valve agrees with what is described for the first embodiment but enables to reach a still higher fall of pressure without any risk of cavitation.

## Claims

1. Valve assembly comprising a housing (1) provided with an inlet (2) and an outlet (3) for fluid and a spherical body (4) rotatably arranged in the valve housing (1) between the in- and outlet (2,3) and mounted sealingly against said valve housing (1), said valve body (4) being provided with fluid flow passages (8-10; 14,15), any cross-section of which being small relative to any cross-section of the inlet/outlet and designed to provide a substantial flow resistance and pressure drop, said flow passages being arranged so that all fluid flow passages are open to the inlet (2) as well as the outlet (3) when the valve is quite open, characterized in that an annular space (5) surrounding said valve body (4) substantially over its entire circumference is formed in said valve housing (1) and in that said flow passages comprise two groups of passages (8,9; 15) arranged so that passages (8) belonging to a first group are provided on one side of a diametric plane of the valve body (4) and are opened to the space (5) and the inlet (2) when the valve opens, while simultaneously passages (9) belonging to a second group provided on the opposite side of said plane are opened to the space (5) and the outlet (3).

2. Assembly as claimed in claim 1, characterized in that the flow passages (9) belonging to the second group have larger cross-section relative to the flow passages (8) belonging to the first group.

3. Assembly as claimed in claim 1 and 2, characterized in that the passages (8,9) with the relatively small cross-section are grooved in the transversal direction in order to increase the flow resistance.

4. Assembly as claimed in claims 1-3, characterized in that the flow passages comprise two passages (10) having a substantially larger cross-section than the first and second group passages (8,9), said passages (10) being diametrically opposed in the plane of the rotation axis.

5. Assembly as claimed in claim 1, characterized in that the valve body (4) has a cylindrical cavity provided with an insert (11) which comprises zigzagged passages (14) in fluid connection with passages (15) arranged in the valve body (4).

6. Assembly as claimed in claim 5, characterized in that the insert (11) consists of concentric, tubular, spaced apart members (12) with corrugated insert elements (13) placed in the interspaces.

## Revendications

1. Ensemble formant robinet, comprenant un corps (1) pourvu d'un conduit d'entrée (2) et d'un conduit de sortie (3) pour fluide, et un obturateur sphérique (4) monté à rotation dans le corps de robinet (1) entre le conduit d'entrée et le conduit de sortie (2, 3), et agencé de façon étanche contre ce corps de robinet (1), l'obturateur de robinet (4) comportant des passages d'écoulement de fluide (8-10; 14, 15), toute section transversale quelconque de ces passages étant petite par rapport à toute section transversale quelconque du conduit d'entrée/conduit de sortie et étant conçue pour assurer une résistance importante à l'écoulement et une chute de pression importante, ces passages d'écoulement étant agencés de manière qu'ils soient tous ouverts vers le conduit d'entrée (2) ainsi que vers le conduit de sortie (3) lorsque la vanne est tout à fait ouverte, cet ensemble étant caractérisé en ce qu'un espace annulaire (5) entourant l'obturateur de robinet (4), essentiellement suivant la totalité de sa circonférence, est formé dans le corps de robinet (1) et en ce que les passages d'écoulement susdits comprennent deux groupes de passages (8, 9; 15) agencés de manière que les passages (8) appartenant à un premier groupe soient prévus d'un côté d'un plan diamétral de l'obturateur de robinet (4) et soient ouverts vers l'espace (5) et le conduit d'entrée (2) lorsque la vanne s'ouvre, tandis que simultanément des passages (9) appartenant à un second groupe et prévus du côté opposé du plan susdit sont ouverts vers l'espace (5) et le conduit de sortie (3).

2. Ensemble suivant la revendication 1, caractérisé en ce que les passages d'écoulement (9) appartenant au second groupe ont une section transversale plus grande que celle des passages d'écoulement (8) appartenant au premier groupe.

3. Ensemble suivant les revendications 1 et 2, caractérisé en ce que les passages (8, 9), présentant la section transversale relativement petite, sont rainurés en direction transversale pour augmenter la résistance à l'écoulement.

4. Ensemble suivant les revendications 1-3, caractérisé en ce que les passages d'écoulement comprennent deux passages (10) présentant une section transversale sensiblement plus grande que celles des passages (8, 9) du premier et du second groupe, les passages (10) étant diamétralement opposés dans le plan de l'axe de rotation.

5. Ensemble suivant la revendication 1, caractérisé en ce que l'obturateur de robinet (4) comporte une cavité cylindrique contenant une pièce rapportée (11) présentant des passages en zigzag (14) qui sont en connexion pour le fluide avec des passages (15) prévus dans l'obturateur de robinet (4).

6. Ensemble suivant la revendication 5, caractérisé en ce que la pièce rapportée (11) consiste en éléments concentriques, tubulaires, espacés (13), des éléments intercalaires ondulés (13) étant mis en place dans les espaces existant entre ces éléments (12).

**Patentansprüche**

1. Ventilanordnung mit einem mit einem Einlaß (2) und eine Auslaß (3) für Fließmittel versehenen Gehäuse (1) und einem kugeligen Körper (4), der in dem Ventilgehäuse (1) zwischen dem Einlaß und Auslaß (2, 3) drehbar und gegen das Ventilgehäuse (1) dichtend angeordnet ist, wobei das Ventilgehäuse (4) mit Fließmittelströmungsdurchgängen (8 bis 10; 14, 15) versehen ist, von denen irgendein Querschnitt klein gegenüber irgendeinem Querschnitt des Einlasses/Auslasses ist und die so ausgebildet sind, daß man einen wesentlichen Strömungswiderstand und Druckabfall bekommt, wobei die Strömungsdurchgänge derart angeordnet sind, daß alle Fließmittelströmungsdurchgänge zu dem Einlaß (2) sowie zu dem Auslaß (3) offen sind, wenn das Ventil ganz geöffnet ist, **dadurch gekennzeichnet**, daß ein Ringraum (5), der den Ventilkörper (4) im wesentlichen über seinen gesamten Umfang umgibt, in dem Ventilgehäuse (1) ausgebildet ist und daß die Strömungsdurchgänge zwei Gruppen von Durchgängen (8, 9; 15) umfassen, die so angeordnet sind, daß zu der ersten Gruppe gehörende Durchgänge (8) auf einer Seite einer Mittelebene des Ventilkörpers (4) vorgesehen und, wenn sich das Ventil öffnet, zu dem Raum (5) und dem Einlaß (2) geöffnet werden, während gleichzeitig zu einer zweiten Gruppe gehörende Durchgänge (9), die auf der entgegengesetzten Seite dieser Ebene vorgesehen sind, zu dem Raum (5) und dem Auslaß (3) geöffnet werden.

2. Anordnung nach Anspruch 1, **dadurch gekennzeichnet**, daß die zu der zweiten Gruppe gehörenden Strömungsdurchgänge (9) größeren Querschnitt als die zu der ersten Gruppe gehörenden Strömungsdurchgänge (8) haben.

3. Anordnung nach Anspruch 1 und 2, **dadurch gekennzeichnet**, daß die Durchgänge (8, 9) mit dem relativ kleinen Querschnitt in der Querrichtung genutet sind, um den Strömungswiderstand zu erhöhen.

4. Anordnung nach Anspruch 1 bis 3, **dadurch gekennzeichnet**, daß die Strömungsdurchgänge zwei Durchgänge (10) mit einem wesentlich größeren Querschnitt als die Durchgänge (8, 9) der ersten und zweiten Gruppe umfassen, wobei diese Durchgänge (10) in der Ebene der Rotationsachse einander diametral gegenüberliegen.

5. Anordnung nach Anspruch 1, **dadurch gekennzeichnet**, daß der Ventilkörper (4) einen zylindrischen Hohlraum hat, der mit einem Einsatz (11) versehen ist, welcher zickzackförmige Durchgänge (14) in Fließmittelverbindung mit in dem Ventilkörper (4) angeordneten Durchgängen (15) umfaßt.

6. Anordnung nach Anspruch 5, **dadurch gekennzeichnet**, daß der Einsatz (11) aus konzentrischen, röhrenförmigen, voneinander im Abstand angeordneten Teilen (12) mit in den Zwischenräume angeordneten, mit Rillen versehenen Einsatzelementen (13) besteht.

# FIG.1

# FIG.2

# FIG.3

# FIG.4

# FIG.5

# FIG.6

# FIG.7